# FASCICULE DE BREVET EUROPEEN

(11) **EP 2 567 896 B1**
(45) Date de publication et mention de la délivrance du brevet: **04.06.2014**
(21) Numéro de dépôt: 12005701.3
(22) Date de dépôt: 06.08.2012
(51) Int. Cl.: B64D 37/14, B64D 37/04

(54) **Architecture d'alimentation en carburant d'un groupe de motorisation d'une voilure tournante équipant un giravion**
Kraftstoffeinspeisungsarchitektur einer Motorenanlage eines Drehflügels zur Ausstattung eines Drehflügelflugzeugs
Fuel supply architecture of a motor group of a rotary wing equipping a rotorcraft

(30) Priorité: 09.09.2011 FR 1102736
(43) Date de publication de la demande: 13.03.2013
(73) Titulaire: Airbus Helicopters, 13725 Marignane Cedex (FR)
(72) Inventeur: Lollini, Lionel, 26120 Montvendre (FR); Morizot, Damien, 13820 Ensues la Redonne (FR)
(74) Mandataire: Schmid, Rudolf

(56) Documents cités:
- WO-A2-2009/139801
- US-A- 3 275 061
- US-A1- 2010 051 749

## Description

La présente invention est du domaine des giravions équipés d'un groupe de motorisation comprenant plusieurs organes moteurs, qui sont sélectivement exploités pour l'entraînement en rotation d'au moins une voilure tournante que comporte un giravion.

La présente invention relève plus particulièrement des aménagements des giravions qui sont relatifs à l'alimentation en carburant d'un tel groupe de motorisation. La présente invention a spécifiquement pour objet une architecture d'alimentation en carburant d'un groupe de motorisation qui équipe un giravion, et qui comporte plusieurs organes moteurs, notamment au nombre de deux, pour l'entraînement en rotation de la voilure tournante sélectivement par l'un et/ou l'autre des organes moteurs.

Les giravions sont des aéronefs dont la sustentation, voire aussi la propulsion et la manoeuvre en vol, sont procurées par au moins une voilure tournante que comporte un giravion. La voilure tournante est entraînée en rotation à vitesse généralement constante par un groupe de motorisation, et comporte des pales qui sont manoeuvrables par des actionneurs pour faire varier leur pas collectivement et/ou cycliquement. Une variation du pas des pales permet de procurer la propulsion et/ou la manoeuvre en vol du giravion. La voilure tournante est susceptible d'être indifféremment une voilure tournante principale procurant au moins la sustentation sinon aussi la propulsion du giravion, une hélice de propulsion dans le cadre d'un hélicoptère hybride par exemple, ou une voilure tournante de queue qui est affectée à la manoeuvre en lacet du giravion. Pour limiter le nombre d'organes moteurs embarqués que comprend le groupe de motorisation, il est commun d'exploiter un même groupe de motorisation pour l'entraînement en rotation des diverses voilures tournantes que comporte le giravion.

Les giravions sont communément répartis en diverses catégories, selon l'architecture du groupe de motorisation dont ils sont équipés et plus particulièrement en fonction de la sécurité offerte par le groupe de motorisation au regard d'une éventuelle panne. Une distinction en deux catégories des giravions est notamment liée à leur faculté de survol sécurisé de différents territoires, au regard d'une éventuelle panne du groupe de motorisation.

Les giravions de catégorie A par exemple, relèvent des giravions dont le groupe de motorisation comporte plusieurs organes moteurs, couramment au nombre de deux, qui sont affectés à l'entraînement de la voilure tournante au moins principale. En cas de panne d'un premier organe moteur, un deuxième organe moteur doit pouvoir être exploité pour permettre une poursuite de vol du giravion, afin éventuellement de l'éloigner d'un territoire sensible, tel qu'un territoire à population dense par exemple.

Les giravions de catégorie A sont notamment à opposer aux giravions de catégorie B, dont l'organisation ne répond pas à une telle règle de survol sécurisé d'un territoire sensible. Les giravions de catégorie B sont susceptibles d'être équipés d'un seul ou de plusieurs organes moteurs, mais leur capacité de poursuite de vol en cas de défaillance du giravion ne répond pas aux contraintes relatives à une capacité réglementée de survol de territoires sensibles.

Pour les giravions de catégorie A, il se pose le problème de l'organisation de l'alimentation en carburant des différents organes moteurs que comprend le groupe de motorisation. Il doit être pris en compte les contraintes auxquelles sont soumis les giravions de catégorie A pour le survol d'un territoire sensible. L'architecture de l'alimentation en carburant du groupe de motorisation équipant un giravion de catégorie A est plus complexe que pour les giravions de catégorie B, chaque organe moteur du groupe de motorisation devant pouvoir être alimenté en carburant pendant une durée déterminée en cas de panne de l'autre organe moteur.

Traditionnellement, l'architecture d'alimentation en carburant d'un groupe de motorisation équipant un giravion de catégorie A, comprend des ensembles d'alimentation en carburant qui sont respectivement affectés à chacun des organes moteurs pour leur mise en fonctionnement sélective et autonome.

Chaque ensemble comprend un réservoir de carburant et une nourrice de réserve d'une quantité minimale de carburant.

Le réservoir est susceptible de comprendre un compartiment unique, ou d'être composé d'une pluralité de compartiments qui sont en libre communication fluidique entre eux. Une telle libre communication fluidique procure naturellement par gravité un équilibrage spontané, de l'un à l'autre des compartiments, de la quantité de carburant qu'ils contiennent respectivement. La nourrice est formée d'une enceinte qui est indépendante au regard d'une libre communication fluidique du carburant, au moins depuis le réservoir vers la nourrice.

La nourrice est d'une capacité devant permettre un approvisionnement de l'organe moteur correspondant en quantité sécurisée de carburant. La quantité sécurisée de carburant correspond à un approvisionnement en carburant de l'organe moteur, qui doit être procuré en cas de défaillance du giravion pour une durée de poursuite de vol minimale qui est réglementée. A titre indicatif, une telle durée de poursuite de vol est de l'ordre d'une vingtaine de minutes, correspondant à un éloignement suffisant du giravion d'un territoire considéré sensible.

L'organe moteur est en communication fluidique avec la nourrice que comporte l'ensemble qui lui est affecté, par l'intermédiaire d'un circuit d'approvisionnement en carburant depuis la nourrice vers l'organe moteur. Le circuit d'approvisionnement comporte un couple de pompes de gavage qui sont plongées dans la nourrice, l'une des pompes de gavage suppléant l'autre pompe de gavage en cas de panne. Pour garantir un approvisionnement en carburant de l'organe moteur en cas de panne des deux pompes de gavage, le circuit d'approvisionnement comporte en outre une pompe d'approvisionnement qui est entraînée par l'organe moteur.

Les nourrices sont chacune alimentées en carburant à partir du réservoir de l'ensemble correspondant, par l'intermédiaire d'un circuit d'alimentation comprenant des pompes d'alimentation qui sont logées à l'intérieur de la nourrice. Il est nécessaire de sécuriser l'alimentation en carburant de la nourrice et, comme pour les pompes de gavage, les pompes d'alimentation sont au nombre de deux, l'une suppléant l'autre en cas de panne.

Pour éviter une redondance de pompes placées à l'intérieur de la nourrice, il est habituel d'exploiter les pompes de gavage pour former les pompes d'alimentation. Le circuit d'alimentation comporte un éjecteur par compartiment pour piéger le carburant et le refouler vers la nourrice correspondante. L'éjecteur, ou organe analogue de capture et de refoulement d'un fluide à l'intérieur d'un circuit fluidique, est un organe courant dans le domaine de l'alimentation en carburant d'un groupe de motorisation équipant un giravion. A partir d'une circulation de fluide à l'intérieur du circuit d'alimentation, qui est notamment forcée par l'une des pompes de gavage formant pompe d'alimentation, l'éjecteur induit un refoulement vers la nourrice du carburant contenu dans le compartiment correspondant.

La capacité de la nourrice étant limitée à ce qui est au moins nécessaire à la poursuite de vol en cas de défaillance du giravion, la nourrice est équipée d'un dispositif de trop plein qui restitue par débordement vers le réservoir l'excès de carburant hors de la nourrice.

La réserve de carburant globalement embarqué à bord du giravion est stockée à l'intérieur des réservoirs des différents ensembles. Un circuit de transfert du carburant est placé en interposition entre l'un et l'autre des réservoirs, et comporte une pompe de transfert à double sens de rotation qui induit une circulation du carburant sélectivement de l'un vers l'autre des réservoirs. Le carburant est transféré de l'un quelconque des réservoirs vers l'autre réservoir, en étant délivré au pied des nourrices.

Le circuit de transfert permet d'équilibrer la quantité de carburant de l'un vers l'autre des ensembles. Un tel équilibrage est utile pour répartir le poids du carburant sur le giravion. Le circuit de transfert permet aussi, notamment en cas de panne de l'un des organes moteurs, de disposer de la totalité du carburant embarqué pouvant être consommé. Les nourrices sont maintenues alimentées dès lors que la totalité du carburant embarqué n'est pas consommée.

Il est aussi prévu un circuit d'intercommunication qui est ménagé entre les réservoirs et qui est agencé en déversoir. Le circuit d'intercommunication est en libre communication fluidique avec chacun des réservoirs, en leur partie haute au regard de la gravité, pour autoriser une échappée du carburant de l'un vers l'autre des réservoirs en cas de trop plein en carburant de l'un des réservoirs.

Dans le domaine de l'aéronautique, les avions sont aussi soumis aux contraintes des aéronefs de catégorie A, relatives à la faculté de procurer une poursuite de vol pendant une durée déterminée, tel que précédemment mentionné. L'agencement d'une architecture d'alimentation en carburant des organes moteurs équipant un aéronef, est étroitement lié à l'organisation propre de l'aéronef. Une telle architecture doit par exemple prendre en compte les modalités de sustentation et de progression en vol de l'aéronef, ou l'environnement disponible pour l'implantation et la mise en relation entre eux des divers organes et circuits d'acheminement du carburant que l'architecture comporte.

Pour se référer cependant à un environnement technologique relevant des organes structurels que comporte une architecture d'alimentation en carburant des aéronefs, on pourra par exemple se reporter aux documents US 2010051749 (TANNER R.B.), US 3275061 (WILLIAMS R.L. et al.), FR 2623774 (AEROSPATIALE), EP2074027 (BOEING CO) ou EP0670264 (DAIMLER BENZ AEROSPACE AG ; TUPOLEV AG), voire encore aux documents US 3275061 (WILLIAMS R.L. et al.) et US 2010/051749 (TANNER R.B.). On pourra aussi se référer au document WO 2009/139801 (SIKORSKY AIRCRAFT Corp.), qui décrit une architecture d'alimentation en carburant d'un giravion équipé d'un groupe de motorisation comprenant un couple d'organes moteurs.

Il est apparu que les architectures traditionnelles d'alimentation en carburant du groupe de motorisation équipant les giravions de catégorie A, méritaient d'être simplifiées. Une telle simplification doit être procurée sans perdre de vue les contraintes auxquelles sont soumis les giravions de catégorie A, au regard notamment des règles de poursuite de vol en cas de panne de l'un des organes moteurs que comprend le groupe de motorisation.

Le but de la présente invention est de proposer une architecture d'alimentation en carburant d'un groupe de motorisation équipant un giravion, qui comporte plusieurs organes moteurs. L'architecture de la présente invention est plus particulièrement du type organisée pour procurer, en cas de panne de l'un des organes moteurs, une sécurisation de poursuite de vol dont relève les giravions de catégorie A, tel que précédemment mentionné.

Il est plus particulièrement visé par la présente invention de proposer une telle architecture dont la structure soit simple, sans que cette simplification ne porte atteinte aux conditions de sécurité requises pour permettre une poursuite de vol en cas d'une panne de l'un des organes moteurs équipant le giravion. De telles conditions de sécurité impliquent notamment une faculté d'approvisionnement en carburant des organes moteurs qui est distincte de l'un à l'autre des organes moteurs, et qui permet leur maintien individuel en fonctionnement pendant une durée minimale suffisante pour éloigner le giravion d'un territoire sensible en cas de panne de l'un des organes moteurs.

La présente invention relève d'un équipement de giravion, qui est constitué d'une architecture d'alimentation en carburant d'un groupe de motorisation. Le groupe de motorisation comporte plusieurs organes moteurs qui sont organisés pour l'entraînement en rotation d'au moins une même voilure tournante équipant le giravion. La voilure tournante est au moins une voilure tournante d'un rotor principal et/ou d'un rotor de queue du giravion, voire encore une hélice propulsive du type équipant un hélicoptère hybride par exemple. Les organes moteurs que comprend le groupe de motorisation sont conjointement affectés à l'entraînement de la voilure tournante, l'un des organes moteurs étant substitutif de l'autre organe moteur en cas de défaillance de cet autre organe moteur.

L'architecture d'alimentation en carburant du groupe de motorisation comprend des ensembles d'alimentation en carburant, qui sont affectés à l'approvisionnement en carburant d'un organe moteur respectif. Chaque ensemble comprend un réservoir de carburant et une nourrice.

Le réservoir de carburant loge une réserve de carburant embarqué sur le giravion pour l'approvisionnement de l'un au moins des organes moteurs du groupe de propulsion. Un circuit de transfert, tel que mentionné plus loin, est avantageusement exploité pour permettre une consommation de la globalité du carburant embarqué par transfert du carburant de l'un vers l'autre des ensembles.

La nourrice est une enceinte de capacité limitée, qui est propre à contenir une quantité de carburant suffisante pour permettre une poursuite de vol du giravion en cas de défaillance, de sorte qu'il puisse s'éloigner pendant une durée prédéterminée d'un territoire sensible qu'il est susceptible de survoler. La nourrice est alimentée en carburant à partir du réservoir par un circuit fluidique d'alimentation, qui achemine le carburant depuis le réservoir vers la nourrice.

Le circuit d'alimentation comporte au moins une pompe d'alimentation qui est plongée dans la nourrice, et au moins un éjecteur qui est plongé dans le réservoir. La pompe d'alimentation induit une circulation du carburant à l'intérieur du circuit d'alimentation, l'alimentation de la nourrice en carburant étant procurée à partir d'une capture et d'un refoulement du carburant par l'éjecteur dans le circuit d'alimentation, depuis le réservoir vers la nourrice.

Le débit du fluide admis à l'intérieur des nourrices par l'intermédiaire du circuit d'alimentation est supérieur au débit de carburant qui est nécessaire à l'approvisionnement en carburant de l'organe moteur. Pour certifier un tel approvisionnement, il est nécessaire d'évacuer le surplus de carburant admis à l'intérieur de la nourrice depuis le réservoir. A cet effet, la nourrice est munie d'un dispositif à déversement, qui induit sa vidange spontanée d'un trop plein de carburant qui est admis à l'intérieur de la nourrice à travers le circuit d'alimentation depuis le réservoir.

L'architecture d'alimentation en carburant du groupe de motorisation comprend aussi un circuit d'approvisionnement en carburant, à partir de la nourrice, de l'organe moteur auquel l'ensemble est affecté. Le circuit d'approvisionnement comporte au moins une pompe d'approvisionnement, qui induit une circulation du carburant à l'intérieur du circuit d'approvisionnement depuis la nourrice vers l'organe moteur. Tel que mentionné plus haut, le débit de la pompe d'approvisionnement est inférieur au débit d'alimentation en carburant de la nourrice à partir de laquelle l'organe moteur correspondant est approvisionné en carburant.

L'architecture d'alimentation en carburant du groupe de motorisation comprend aussi une intercommunication agencée en déversoir. L'intercommunication est interposée entre les ensembles, en partie haute de ces ensembles au regard de la gravité. L'intercommunication forme un déversoir d'un trop plein de carburant de l'un vers l'autre des ensembles.

L'architecture d'alimentation en carburant du groupe de motorisation comprend aussi un circuit de transfert forcé du carburant de l'un vers l'autre des ensembles. Le circuit de transfert comporte au moins une pompe de transfert, qui induit une circulation bidirectionnelle du carburant, sélectivement de l'un vers l'autre des ensembles. Le circuit de transfert induit une circulation du carburant depuis un premier ensemble vers un deuxième ensemble suivant un premier sens de circulation du carburant, et depuis le dit deuxième ensemble vers le dit premier ensemble suivant un deuxième sens de circulation du carburant opposé au premier sens.

La pompe de transfert est formée d'au moins un organe de capture et de refoulement du carburant de l'un vers l'autre des ensembles, pour équilibrer la quantité de carburant que les ensembles contiennent respectivement. La pompe de transfert est organisée de sorte que le carburant puisse être acheminé à travers le circuit de transfert, sélectivement de l'un vers l'autre des ensembles en fonction des besoins procurant l'équilibrage en carburant recherché.

Selon la présente invention, l'équipement de giravion constitué de l'architecture d'alimentation en carburant du groupe de motorisation d'un giravion telle que décrite, est principalement reconnaissable en ce que le réservoir que comporte chacun des ensembles est formé d'au moins un réservoir commun aux deux ensembles. Un tel réservoir commun est susceptible de comporter un ou plusieurs compartiments en libre communication fluidique, le carburant étant contenu dans un même volume en libre communication fluidique pour l'un et l'autre des ensembles. Les éjecteurs des circuits d'alimentation que comportent respectivement chacun des ensembles sont plongés à l'intérieur du dit réservoir commun. Les circuits d'alimentation en carburant de l'une et de l'autre des nourrices que comporte respectivement les ensembles, prélèvent chacun et individuellement dans le réservoir commun le carburant nécessaire à l'alimentation en carburant de chacune des nourrices.

Chacun des organes moteurs dispose de sa propre nourrice, qui est individuellement alimentée en carburant par le circuit d'alimentation qui lui est affecté. Chacun des organes moteurs peut être individuellement approvisionné en carburant à partir de la nourrice qui lui est affecté pendant une durée de poursuite de vol prédéterminée. En cas de panne de l'un des organes moteurs, l'autre organe moteur dispose individuellement, à partir de la nourrice qui lui est affectée, d'au moins de la quantité de carburant nécessaire pour permettre au giravion de poursuivre le vol pendant au moins la durée de poursuite de vol prédéterminée. L'architecture d'alimentation en carburant du groupe de motorisation répond de manière satisfaisante aux contraintes de sécurité dont relève les giravions de catégorie A.

La mise en commun des réservoirs que comportent les ensembles, rompt avec les traditions du domaine des giravions au regard des modalités d'approvisionnement individuel en carburant des giravions de catégorie A. Pour de mêmes conditions de sécurisation de survol d'un territoire sensible, une redondance des pompes et une complexification des différents circuits que comporte l'architecture sont évitées.

Selon une approche globale de la démarche inventive de la présente invention, la mise en commun des réservoirs est accompagnée d'une fusion des fonctions respectives qui sont procurées par les pompes respectivement mises en oeuvre par le circuit d'alimentation et par le circuit de transfert. La mise en commun des réservoirs est aussi accompagnée d'une exploitation de l'intercommunication pour alimenter en permanence chacune des nourrices, y compris en cas de défaillance d'une pompe d'alimentation qui est avantageusement souhaitée unique pour chacun des ensembles.

L'intercommunication est notamment placée en interposition entre les ensembles par l'intermédiaire des nourrices que l'intercommunication met en relation fluidique l'une avec l'autre. Les pompes d'alimentation sont chacune individuellement exploitées pour former globalement la pompe de transfert, selon un sens respectif de circulation du carburant de l'un vers l'autre des ensembles. Une défaillance d'une pompe d'alimentation rend impossible un transfert de carburant de l'un vers l'autre des ensembles suivant un sens de circulation correspondant. En cas de défaillance d'une pompe d'alimentation, l'intercommunication permet le remplissage forcé en carburant de la nourrice correspondante, à partir de l'autre nourrice qui est alimentée en carburant par la pompe d'alimentation qui lui est affectée. Dans ce cadre, la capacité d'alimentation en carburant de chacune des nourrices par l'intermédiaire des circuits d'alimentation qui leur sont respectivement affectés, permet avantageusement en cas de défaillance de l'une des pompes d'alimentation, une alimentation en carburant de la nourrice correspondante à partir de l'autre nourrice par l'intermédiaire de l'intercommunication. Ladite autre nourrice constitue alors une source d'alimentation annexe en carburant de la nourrice dont la pompe d'alimentation est défaillante, suivant le sens correspondant de transfert de carburant d'un ensemble vers l'autre par l'intermédiaire de l'intercommunication.

Plus particulièrement, les circuits d'alimentation que comportent respectivement chacun des ensembles forment conjointement le circuit de transfert par l'intermédiaire du réservoir commun. Les pompes d'alimentation que comportent respectivement les circuits d'alimentation de chacun des ensembles, forment conjointement la pompe de transfert à circulation bidirectionnelle du carburant sélectivement de l'un vers l'autre des ensembles.

Les éjecteurs que comportent respectivement les ensembles, puisent chacun à l'intérieur du réservoir commun le carburant nécessaire à l'alimentation de l'une et l'autre des nourrices qui leur sont respectivement affectées. Le réservoir commun forme un organe participant du circuit de transfert, en ménageant une capacité de mise en relation fluidique des nourrices entre elles, par l'intermédiaire des circuits d'alimentation qui leur sont respectivement affectés.

Les nourrices que comportent respectivement l'un et l'autre des ensembles, sont des enceintes distinctes l'une de l'autre au regard d'une libre communication fluidique au moins selon un sens d'acheminement du carburant depuis le réservoir vers les nourrices. Les pompes d'alimentation induisent une circulation forcée du carburant de l'un vers l'autre des ensembles, et plus particulièrement une circulation forcée du carburant de l'une vers l'autre des nourrices, suivant des sens respectifs de circulation du carburant de l'une vers l'autre des nourrices.

Plus particulièrement encore, l'intercommunication est ménagée en interposition entre les nourrices que comprennent respectivement chacun des ensembles. L'intercommunication forme un déversoir d'un trop plein de carburant de l'une vers l'autre des nourrices, sous l'effet d'une circulation du carburant à travers l'intercommunication qui est forcée par les pompes d'alimentation en carburant équipant respectivement l'une et l'autre des nourrices. L'intercommunication débouche avantageusement à l'intérieur de l'une et l'autre des nourrices, en partie haute des nourrices et en amont des dispositifs à déversement que comportent respectivement l'une et l'autre des nourrices. Les notions haute et amont sont à considérer au regard du sens de montée du carburant à l'intérieur des nourrices depuis leur fond.

L'intercommunication et les dispositifs à déversement que comportent respectivement l'une et l'autre des nourrices, composent avantageusement ensemble des moyens d'évacuation d'un trop plein des nourrices selon deux seuils respectifs d'évacuation d'un trop plein de carburant hors des nourrices. Un premier seuil correspond à une quantité minimale de carburant contenu à l'intérieur individuellement de l'une et l'autre des nourrices. Un deuxième seuil correspond à un excès de carburant au regard d'une quantité maximale de carburant que les nourrices sont susceptibles de contenir respectivement.

Le deuxième seuil, succédant au premier seuil au regard du sens de montée du carburant des nourrices depuis leur fond, correspond à la fonction de l'intercommunication procurant un déversement d'un trop-plein de l'un vers l'autre des ensemble. Une telle fonction est procurée non seulement par l'intercommunication, mais aussi par l'intermédiaire des dispositifs à déversement que les nourrices comportent respectivement.

Il est à considérer que l'intercommunication participe du circuit de transfert, en procurant un transfert spontané du trop-plein de l'une vers l'autre des nourrices en cas de défaillance d'une pompe d'alimentation. La distinction du volume contenant le carburant de l'un à l'autre des ensembles, correspond à la distinction du volume des nourrices entre elles, augmenté du volume du circuit d'alimentation correspondant.

Le réservoir étant commun à l'un et l'autre des ensembles, le transfert de carburant ne s'effectue pas de l'un vers l'autre des réservoirs respectifs des ensembles, mais de l'une vers l'autre des nourrices. Les pompes d'alimentation procurent un transfert du carburant de l'un vers l'autre des ensembles, et plus particulièrement de l'une et vers l'autre des nourrices, suivant un premier sens de transfert du carburant. L'intercommunication procure un transfert du carburant de l'un vers l'autre des ensembles, et plus particulièrement de l'une et vers l'autre des nourrices, suivant l'autre deuxième sens opposé de transfert du carburant, sous l'effet de l'entraînement forcé du carburant induit par la pompe d'alimentation correspondante.

Une sécurisation du circuit d'alimentation et du circuit de transfert par une redondance de pompes d'alimentation/transfert logées dans une même nourrice peut être évitée. La pompe d'alimentation en carburant de l'une des nourrices forme une pompe substitutive de sécurité pour l'autre pompe d'alimentation en carburant de l'autre nourrice, en cas de panne de cette autre pompe d'alimentation.

Il est à considérer que l'intercommunication forme avantageusement un organe d'alimentation spontanée de l'une quelconque des nourrices, en cas de panne de la pompe d'alimentation en carburant que comporte le circuit d'alimentation affecté à cette nourrice. Il est encore à considérer que les pompes d'alimentation sont de préférence uniques pour chacun des ensembles, et que le circuit d'alimentation de chacune des nourrices est d'une capacité adaptée à l'alimentation simultanée des deux nourrices.

La capacité des nourrices est apte à être strictement limitée au volume de carburant nécessaire au maintien en fonctionnement de l'organe moteur correspondant pendant la durée de poursuite de vol prédéterminée. Une telle aptitude est procurée par l'association entre les pompes d'alimentation formant conjointement une pompe de transfert, et l'intercommunication au regard du premier seuil de déversement du carburant entre les nourrices. Une telle aptitude est procurée y compris en prenant en compte la faculté d'une alimentation en carburant de chacune des nourrices à partir de l'exploitation d'une seule pompe d'alimentation dont la capacité en débit est adaptée à l'alimentation simultanée des deux nourrices.

La nourrice étant notamment logée à l'intérieur du réservoir, son volume hors tout et son encombrement global sont restreints au mieux. La liberté d'agencement du réservoir commun selon l'architecture du giravion en est favorisée. Le nombre de pompes nécessaires au fonctionnement de l'architecture d'alimentation en carburant d'un groupe de motorisation d'un giravion de catégorie A, est limité en étant réduit au nombre de deux pompes, qui forment respectivement l'une et l'autre des pompes d'alimentation, nombre de pompes qui est de préférence augmenté par des pompes d'approvisionnement.

Pour parfaire la réduction du nombre de pompes que comporte l'architecture, les pompes d'approvisionnement sont de préférence réduites aux pompes qui sont traditionnellement intégrées au groupe de motorisation et qui sont entraînées par les organes moteurs correspondants.

Plus particulièrement et selon une forme de réalisation, l'une au moins des pompes d'alimentation est susceptible d'être une pompe de gavage, qui forme une pompe d'approvisionnement en carburant de l'organe moteur correspondant.

Il est cependant préféré une forme de réalisation selon laquelle une pompe du groupe de motorisation, qui est entraînée par au moins un quelconque organe moteur correspondant, forme une pompe d'approvisionnement en carburant de cet organe moteur.

L'agencement du réservoir commun est facilement adaptable selon l'architecture spécifique du giravion sur lequel est installée l'architecture d'alimentation en carburant du groupe de motorisation qu'il comporte. Selon des variantes de réalisation, le réservoir commun est susceptible d'être formé d'un compartiment unique ou d'être composé d'une pluralité de compartiments qui sont en libre communication fluidique entre eux. Les nourrices sont de préférence installées à l'intérieur d'un même compartiment, pour faciliter l'organisation de l'intercommunication.

Plus particulièrement et selon une forme de réalisation, le réservoir commun est formé d'un compartiment unique, qui loge l'une et l'autre des nourrices que comportent respectivement chacun des ensembles.

Selon une autre forme de réalisation, le réservoir commun est formé à partir d'une pluralité de compartiments en libre communication fluidique entre eux. L'un quelconque au moins des compartiments composant le réservoir commun loge au moins une nourrice que comporte au moins l'un des ensembles.

Par exemple et de préférence, les nourrices sont conjointement logées dans un même compartiment du réservoir commun. Un compartiment composant le réservoir commun loge l'une et l'autre des nourrices que comportent respectivement chacun des ensembles, pour faciliter l'implantation de l'intercommunication reliant les nourrices entre elles.

Par exemple encore, un premier compartiment loge une première nourrice, un autre compartiment logeant l'autre nourrice. L'un et l'autre des compartiments sont néanmoins placés à proximité l'un de l'autre pour faciliter l'implantation de l'intercommunication reliant les nourrices entre elles.

La présente invention a aussi pour objet un giravion équipé d'un groupe de motorisation comprenant une pluralité d'organes moteurs, qui sont alimentés en carburant à partir d'une architecture d'alimentation en carburant telle qu'elle vient d'être décrite.

Le giravion comporte un groupe de motorisation comprenant une pluralité d'organes moteurs, notamment au nombre de deux. Le giravion est un giravion de catégorie A, qui est conforme à la règlementation relative au survol de territoires sensibles, selon laquelle en cas de panne de l'un des organes moteurs, voire d'une défaillance d'un quelconque organe du giravion, le giravion est apte à poursuivre son vol pendant une durée prédéterminée.

Chacun des organes moteurs équipant le giravion est indépendamment approvisionné en carburant à partir de nourrices qui leurs sont respectivement affectées. Les nourrices sont alimentées en carburant au moyen de circuits d'alimentation qui leur sont respectivement propres, à partir d'un réservoir commun de carburant. Le circuit d'alimentation en carburant d'une nourrice constitue un circuit d'alimentation en carburant de l'autre nourrice en cas de défaillance du circuit d'alimentation de cette autre nourrice, par l'intermédiaire de l'intercommunication qui participe du circuit de transfert forcé en carburant de l'un vers l'autre des ensembles que comprennent respectivement l'une et l'autre des nourrices.

Un exemple de réalisation de la présente invention va être décrit en relation avec les figures de la planche annexée, dans laquelle :

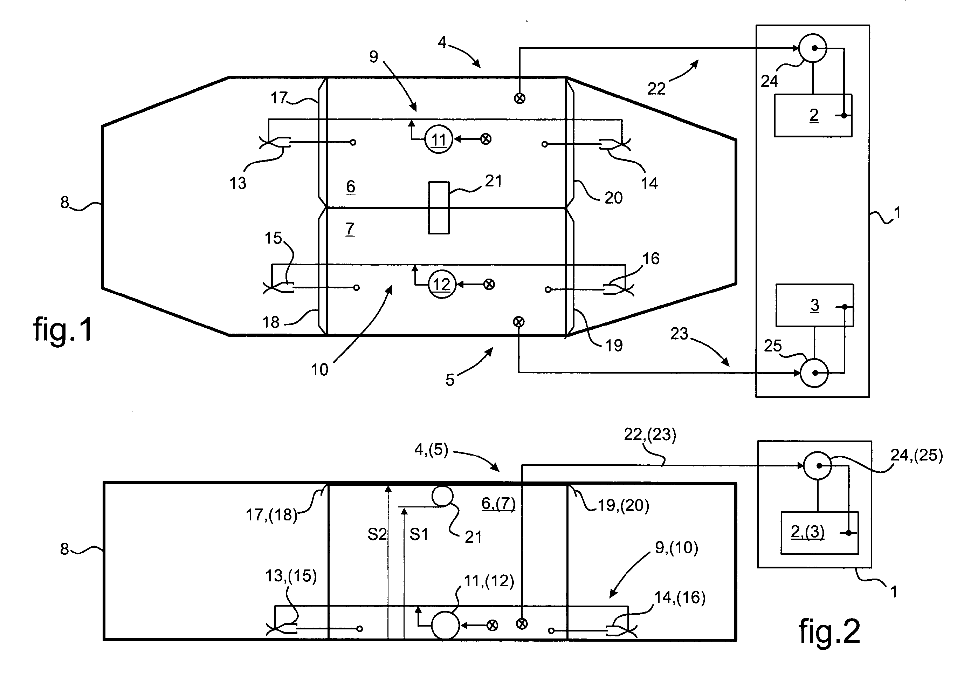

La fig.1 est une illustration schématique d'un équipement de giravion de la présente invention, constitué d'une architecture d'alimentation en carburant d'un groupe de motorisation à deux organes moteurs équipant le giravion.
La fig.2 est une illustration schématique de l'un des ensembles que comprend l'équipement représenté sur la fig.1. L'ensemble qui est représenté sur la fig.2 étant similaire à l'autre ensemble, les références inscrites sur la fig.2 qui sont correspondantes à des organes analogues de l'un à l'autre des ensembles, sont à titre indicatif mentionnées entre parenthèses pour l'autre ensemble.

Sur les figures, un équipement de giravion est constitué d'une architecture d'alimentation en carburant d'un groupe de motorisation 1. Le groupe de motorisation 1 est dédié à l'entraînement en rotation d'au moins une voilure tournante équipant le giravion, et comprend deux organes moteurs 2,3. En cas de panne de l'un des organes moteurs 2,3, l'autre organe moteur 2,3 est substitutif de l'organe moteur 2,3 défaillant pour maintenir un entraînement en rotation de la voilure tournante pendant une durée minimale prédéterminée.

Les organes moteurs 2,3 sont individuellement approvisionnés en carburant, à partir d'ensembles 4,5 d'alimentation en carburant qui leur sont respectivement affectés. Chaque ensemble 4,5 comporte une nourrice 6,7, d'une capacité correspondante à la quantité de carburant nécessaire pour alimenter l'organe moteur 2,3 correspondant en carburant, pendant la durée minimale prédéterminée. Les nourrices 6,7 sont conjointement logées dans un réservoir commun 8, qui contient la réserve globale de carburant embarqué à bord du giravion. Les nourrices 6,7 sont individuellement alimentées en carburant à partir du réservoir commun 8, par l'intermédiaire de circuits d'alimentation 9,10 respectivement affectés à l'une et à l'autre des nourrices 6,7.

Les circuits d'alimentation 9,10 comprennent chacun une pompe d'alimentation 11,12 et au moins un éjecteur 13, 14, 15, 16. Sur l'exemple de réalisation illustré, les circuits d'alimentation 9,10 comprennent chacun un couple d'éjecteurs 13,14 et 15,16, qui sont plongeants dans des zones respectivement avant et arrière du réservoir commun 8. Les notions avant et arrière sont à considérer au regard de la position d'implantation du réservoir commun 8 à bord d'un giravion. Les pompes d'alimentation 11,12 sont respectivement plongées en fond de la nourrice 6,7 qui leur est affectée, et les éjecteurs 13,14,15,16 sont plongés en fond du réservoir commun 8. Les nourrices 6,7 sont individuellement aménagées avec un dispositif à déversement 17,18,19,20, qui permet de restituer spontanément, par débordement, un éventuel trop plein des nourrices 6,7 vers le réservoir commun 8.

Les nourrices 6,7 sont en communication l'une avec l'autre par l'intermédiaire d'une intercommunication 21, qui est positionnée en partie haute des nourrices 6,7 et en amont des dispositifs à déversement 17,18,19,20 qu'elles comportent respectivement. La position amont de l'intercommunication 21 est à considérer au regard du sens de montée du carburant à l'intérieur des nourrices 6,7 depuis leur fond jusqu'aux dispositifs à déversement 17,18,19,20 correspondants.

Sur la fig.2, la position amont de l'intercommunication 21 détermine la capacité individuelle des nourrices qui est relative à un premier seuil S1 de capacité. Ce premier seuil S1 de capacité correspond à la quantité minimale de carburant nécessaire à l'approvisionnement en carburant de l'organe moteur 2,3 correspondant, qui permet son maintien en fonctionnement pendant la durée minimale prédéterminée. Ce premier seuil S1 correspond au seuil à partir duquel l'intercommunication 21 est mise à profit pour transférer spontanément un trop plein de carburant d'un ensemble 4,5 à l'autre, sous l'effet d'une circulation forcée du carburant qui est notamment induite par une pompe d'alimentation 11,12 en cas de défaillance de l'autre pompe d'alimentation 11,12. Chacune des nourrices 6,7 est susceptible d'être alimentée en carburant par l'intermédiaire de l'intercommunication 21, à partir de l'autre nourrice 6,7 depuis le réservoir commun 8.

Les dispositifs à déversement 17,18,19,20 sont placés en position aval de l'intercommunication 21, en déterminant la capacité individuelle des nourrices 6,7 qui est relative à un deuxième seuil S2 de capacité. Ce deuxième seuil S2 de capacité correspond à la capacité totale des nourrices au-delà de la laquelle le carburant est restitué au réservoir commun 8.

Les nourrices 6,7 sont chacune pourvues d'un couple de moyens de vidange d'un trop plein. Un premier moyen de vidange est formé par l'intercommunication 21 à un premier seuil S1 de vidange de l'une vers l'autre des nourrices 6,7. Ce premier seuil S1 de vidange est exploité comme limite de capacité minimale de carburant que les nourrices 6,7 sont propres chacune à contenir, et comme seuil de remplissage, à partir de l'une des nourrices 6,7, de l'autre nourrice 6,7 dans le cas d'une défaillance de la pompe d'alimentation 11,12 dont cette autre nourrice 6,7 est équipée. Un deuxième moyen de vidange est formé par le dispositif à déversement 17,18,19,20 que les nourrices 6,7 comportent respectivement, à un deuxième seuil S2 de vidange des nourrices 6,7 vers le réservoir commun 8 qui est seulement autorisée dans le cas où les deux nourrices 6,7 sont chacune maintenues remplies.

Sur les figures, les organes moteurs 2,3 sont chacun individuellement alimentés en carburant à partir de l'une des nourrices 6,7 qui leur est affectée, par l'intermédiaire de circuits d'approvisionnement 22,23 correspondants. Les circuits d'approvisionnement 22,23 comprennent chacun une pompe d'approvisionnement 24,25 qui est entraînée par l'organe moteur 2,3 correspondant, et collectent en fond de nourrice 6,7 le carburant exploité individuellement par les organes moteurs 2,3.

## Revendications

1. Equipement de giravion constitué d'une architecture d'alimentation en carburant d'un groupe de motorisation (1), qui comporte plusieurs organes moteurs (2,3) d'entraînement en rotation d'au moins une même voilure tournante équipant le giravion, l'architecture comprenant :
*) des ensembles (4,5) d'alimentation en carburant qui sont affectés à l'approvisionnement en carburant d'un organe moteur (2,3) respectif,
- chaque ensemble (4,5) comprenant un réservoir de carburant et une nourrice (6,7) qui est alimentée en carburant à partir du réservoir par un circuit d'alimentation (9,10),
- le circuit d'alimentation (9,10) comportant au moins une pompe d'alimentation (11,12) plongée dans la nourrice (6,7) et au moins un éjecteur (13,14,15,16) plongé dans le réservoir, la pompe d'alimentation (11,12) induisant une circulation du carburant à l'intérieur du circuit d'alimentation (9,10) à partir d'une capture et d'un refoulement du carburant par l'éjecteur (13,14,15,16) dans le circuit d'alimentation (9,10) depuis le réservoir vers la nourrice (6,7),
- la nourrice (6,7) étant munie d'un dispositif à déversement (17,18,19,20) induisant sa vidange spontanée d'un trop plein,
*) un circuit d'approvisionnement (22,23) en carburant, à partir de la nourrice (6,7), de l'organe moteur (2,3) auquel l'ensemble (4,5) est affecté, le circuit d'approvisionnement (22,23) comportant au moins une pompe d'approvisionnement (24,25) qui induit une circulation du carburant à l'intérieur du circuit d'approvisionnement (22,23) depuis la nourrice (6,7) vers l'organe moteur (2,3),
*) une intercommunication (21) qui est interposée entre les ensembles (4,5) et qui forme un déversoir d'un trop plein de carburant de l'un vers l'autre des ensembles (4,5),
*) un circuit de transfert forcé du carburant de l'un vers l'autre des ensembles (4,5), qui comporte au moins une pompe de transfert induisant une circulation bidirectionnelle du carburant sélectivement de l'un vers l'autre des ensembles (4,5),
**caractérisé en ce que** le réservoir que comportent chacun des ensembles est au moins un réservoir commun (8) aux deux ensembles (4,5), à l'intérieur duquel réservoir commun (8) sont plongés les éjecteurs (13,14,15,16) des circuits d'alimentation (9,10) que comportent respectivement chacun des ensembles (4,5).

2. Equipement de giravion selon la revendication 1,
**caractérisé en ce que** les circuits d'alimentation (9,10) que comportent respectivement chacun des ensembles (4,5) forment conjointement le circuit de transfert par l'intermédiaire du réservoir commun (8), les pompes d'alimentation (11,12) que comportent respectivement les circuits d'alimentation (9,10) de chacun des ensembles (4,5) formant conjointement la pompe de transfert à circulation bidirectionnelle du carburant sélectivement de l'un vers l'autre des ensembles (4,5).

3. Equipement de giravion selon l'une quelconque des revendications 1 et 2,
**caractérisé en ce que** l'intercommunication (21) est ménagée en interposition entre les nourrices (6,7) que comprennent respectivement chacun des ensembles (4,5), en formant un déversoir d'un trop plein de carburant de l'une vers l'autre des nourrices (6,7).

4. Equipement de giravion selon la revendication 3, **caractérisé en ce que** l'intercommunication (21) débouche à l'intérieur de l'une et l'autre des nourrices (6,7), en partie haute des nourrices (6,7) et en amont des dispositifs à déversement (17,18,19,20) que comportent respectivement l'une et l'autre des nourrices (6,7).

5. Equipement de giravion selon l'une quelconque des revendications précédentes,
**caractérisé en ce que** l'intercommunication (21) forme un organe d'alimentation spontanée de l'une quelconque des nourrices (6,7), en cas de panne de la pompe d'alimentation (11,12) en carburant que comporte le circuit d'alimentation (9,10) affecté à cette nourrice (6,7).

6. Equipement de giravion selon la revendication 5,
**caractérisé en ce que** les pompes d'alimentation (11,12) sont uniques pour chacun des ensembles (4,5), le circuit d'alimentation (9,10) de chacune des nourrices (6,7) étant d'une capacité adaptée à l'alimentation simultanée des deux nourrices (6,7).

7. Equipement de giravion selon l'une quelconque des revendications précédentes,
**caractérisé en ce que** l'une au moins des pompes d'alimentation (11,12) est une pompe de gavage formant une pompe d'approvisionnement en carburant de l'organe moteur (2,3) correspondant.

8. Equipement de giravion selon l'une quelconque des revendications précédentes,
**caractérisé en ce qu'**une pompe du groupe de motorisation (1), qui est entraînée par au moins un quelconque organe moteur (2,3) correspondant, forme une pompe d'approvisionnement (24,25) en carburant de cet organe moteur (2,3).

9. Equipement de giravion selon l'une quelconque des revendications précédentes,
**caractérisé en ce que** le réservoir commun (8) est formé d'un compartiment unique logeant l'une et l'autre des nourrices (6,7) que comportent respectivement chacun des ensembles (4,5).

10. Equipement de giravion selon l'une quelconque des revendications 1 à 8,
**caractérisé en ce que** :
- le réservoir commun (8) est formé à partir d'une pluralité de compartiments en libre communication fluidique entre eux, et
- l'un quelconque au moins des compartiments composant le réservoir commun (8) loge au moins une nourrice (6,7) que comporte au moins l'un des ensembles (4,5).

11. Giravion équipé d'un groupe de motorisation (1) comprenant une pluralité d'organes moteurs (2,3), qui sont alimentés en carburant à partir d'une architecture d'alimentation en carburant selon l'une quelconque des revendications précédentes.

12. Giravion selon la revendication 11,
**caractérisé en ce que** :
*) chacun des organes moteurs (2,3) équipant le giravion est indépendamment approvisionné en carburant à partir de nourrices (6,7) qui leurs sont respectivement affectées,
*) les nourrices (6,7) sont alimentées en carburant au moyen de circuits d'alimentation (9,10) qui leur sont respectivement propres, à partir d'un réservoir commun (8) de carburant,
*) le circuit d'alimentation (9,10) en carburant d'une nourrice (6,7) constitue un circuit d'alimentation (9,10) en carburant de l'autre nourrice (6,7) en cas de défaillance du circuit d'alimentation (9,10) de cette autre nourrice (6,7), par l'intermédiaire de l'intercommunication (21) qui participe du circuit de transfert forcé en carburant de l'un vers l'autre des ensembles (4,5) que comprennent respectivement l'une et l'autre des nourrices (6,7).

## Patentansprüche

1. Ausrüstung eines Drehflügelflugzeugs, bestehend aus einer Kraftstoffeinspeisungsarchitektur einer Motorenanlage (1), die mehrere Antriebsorgane (2, 3) zum Drehantrieb mindestens ein und desselben Drehflügels, mit dem das Drehflügelflugzeug ausgerüstet ist, beinhaltet, wobei die Architektur aufweist:
*) Kraftstoffeinspeisungseinheiten (4, 5), die dazu bestimmt sind, ein jeweiliges Antriebsorgan (2, 3) mit Kraftstoff zu versorgen,
- wobei jede Einheit (4, 5) einen Kraftstoffbehälter und einen Verteiler (6, 7) aufweist, der ausgehend von dem Behälter über einen Zufuhrkreis (9, 10) mit Kraftstoff versorgt wird,
- wobei der Zufuhrkreis (9, 10) mindestens eine Förderpumpe (11, 12), die in den Verteiler (6, 7) eingetaucht ist, und mindestens einen Ausstoßer (13, 14, 15, 16), der in den Behälter eingetaucht ist, aufweist, wobei die Förderpumpe (11, 12) eine Kraftstoffzirkulation im Inneren des Zufuhrkreises (9, 10) ausgehend von einem Aufnehmen und Ausstoßen des Kraftstoffs durch den Ausstoßer (13, 14, 15, 16) in dem Zufuhrkreis (9, 10) ausgehend von dem Behälter in den Verteiler (6, 7) induziert,
- wobei der Verteiler (6, 7) mit einer Überlaufvorrichtung (17, 18, 19, 20) versehen ist, die seine spontane Entleerung bei einer Überfüllung induziert,
*) einen Kraftstoffzufuhrkreis (22, 23) des Antriebsorgans (2, 3), dem die Einheit (4, 5) zugeordnet ist ausgehend von dem Verteiler (6, 7), wobei der Zufuhrkreis (22, 23) mindestens eine Förderpumpe (24, 25) aufweist, die im Inneren des Zufuhrkreises (22, 23) eine Kraftstoffströmung von dem Verteiler (6, 7) zum Antriebsorgan (2, 3) hin induziert,
*) eine Verbindung (21), die zwischen den Einheiten (4, 5) angeordnet ist und einen Überlauf bei zu großer Befüllung mit Kraftstoff von einer der Einheiten zu der anderen (4, 5) bildet,
*) einen Kreis für eine erzwungene Verlagerung von Kraftstoff von einer Einheit in die andere Einheit (4, 5), der mindestens eine Transferpumpe aufweist, die eine Strömung des Kraftstoffs wahlweise in zwei Richtungen von einer Einheit in die andere (4, 5) induziert,
**dadurch gekennzeichnet, dass** der Behälter, den jede der Einheiten enthält, mindestens ein gemeinsamer Behälter (8) für zwei Einheiten (4, 5) ist, wobei im Inneren des gemeinsamen Behälters (8) die Ausstoßer (13, 14, 15,16) der Förderkreise (9, 10) eingetaucht sind, die jeweils jede der Einheiten (4, 5) aufweist.

2. Ausrüstung eines Drehflügelflugzeugs nach Anspruch 1,
**dadurch gekennzeichnet, dass** die Förderkreise (9, 10), die jede der Einheiten (4, 5) jeweils aufweist, zusammen über den gemeinsamen Behälter (8) den Verlagerungskreis bilden, wobei die Förderpumpen (11, 12), die jeweils die Förderkreise (9, 10) einer jeden Einheit (4, 5) aufweisen, zusammen die Verlagerungspumpe mit einer selektiven Strömung des Kraftstoffs in zwei Richtungen von einer zur anderen Einheit (4, 5) bilden.

3. Ausrüstung eines Drehflügelflugzeugs nach einem der Ansprüche 1 und 2,
**dadurch gekennzeichnet, dass** die Verbindung (21) zwischen den Verteilern (6, 7), die jede der Einheiten (4, 5) jeweils aufweist, angeordnet ist, wodurch ein Überlauf bei zu großer Befüllung mit Kraftstoff von einem der Verteiler zum anderen (6, 7) gebildet wird.

4. Ausrüstung eines Drehflügelflugzeugs nach Anspruch 3,
**dadurch gekennzeichnet, dass** die Verbindung (21) im Inneren des einen und des anderen Verteilers (6, 7) im oberen Bereich der Verteiler (6, 7) und stromauf bezüglich der Überlaufvorrichtungen (17, 18, 19, 20), die jeweils der eine und der andere Verteiler (6, 7) aufweist, mündet.

5. Ausrüstung eines Drehflügelflugzeugs nach einem der vorstehenden Ansprüche,
**dadurch gekennzeichnet, dass** die Verbindung (21) ein Organ einer spontanen Befüllung eines der Verteiler (6, 7) bildet, beim Ausfall einer Kraftstoff-Förderpumpe (11, 12), die der Förderkreis (9, 10) aufweist, der diesem Verteiler (6, 7) zugeordnet ist.

6. Ausrüstung eines Drehflügelflugzeugs nach Anspruch 5,
**dadurch gekennzeichnet, dass** die Förderpumpen (11, 12) einzeln für jede der Einheiten (4, 5) vorgesehen sind, wobei der Förderkreis (9, 10) eines jeden Verteilers (6, 7) eine Kapazität aufweist, die an eine gleichzeitige Speisung der beiden Verteiler (6, 7) angepasst ist.

7. Ausrüstung eines Drehflügelflugzeugs nach einem der vorstehenden Ansprüche,
**dadurch gekennzeichnet, dass** mindestens eine der Förderpumpen (11, 12) eine Zufuhrpumpe ist, die eine Pumpe zur Speisung des entsprechenden Antriebsorgans (2, 3) mit Kraftstoff darstellt.

8. Ausrüstung eines Drehflügelflugzeugs nach einem der vorstehenden Ansprüche,
**dadurch gekennzeichnet, dass** eine Pumpe der Motorenanlage (1), die von mindestens einem der entsprechenden Antriebsorgane (2, 3) angetrieben wird, eine Kraftstoffzufuhrpumpe (24, 25) dieses Antriebsorgans (2, 3) bildet.

9. Ausrüstung eines Drehflügelflugzeugs nach einem der vorstehenden Ansprüche,
**dadurch gekennzeichnet, dass** der gemeinsame Behälter (8) aus einer einzigen Kammer gebildet ist, die den einen und den anderen Verteiler (6, 7), die jeweils jede der Einheiten (4, 5) aufweist, aufnimmt.

10. Ausrüstung eines Drehflügelflugzeugs nach einem der Ansprüche 1 bis 8,
**dadurch gekennzeichnet, dass**
- der gemeinsame Behälter (8) ausgehend von einer Mehrzahl von Kammern gebildet wird, die fluidmäßig frei miteinander in Verbindung stehen, und
- mindestens eine der Kammern, aus denen der gemeinsame Behälter (8) gebildet ist, mindestens einen Verteiler (6, 7) aufweist, den mindestens eine der Einheiten (4, 5) aufweist.

11. Drehflügelflugzeug mit einer Motorenanlage (1), die eine Mehrzahl von Antriebsorganen (2, 3) aufweist, die ausgehend von einer Kraftstoffeinspeisearchitektur nach einem der vorstehenden Ansprüche mit Kraftstoff gespeist werden.

12. Drehflügelflugzeug nach Anspruch 11,
**dadurch gekennzeichnet, dass**
*) jedes der Antriebsorgane (2, 3), mit welchen das Drehflügelflugzeug ausgerüstet ist, ausgehend von den Verteilern (6, 7), die ihnen jeweils zugeordnet sind, unabhängig mit Kraftstoff gespeist wird,
*) die Verteiler (6, 7) mit Kraftstoff durch die Zufuhrkreise (9, 10), die ihnen jeweils eigen sind, ausgehend von einem gemeinsamen Kraftstoffbehälter (8) mit Kraftstoff gespeist werden,
*) der Kraftstoffzufuhrkreis (9, 10) eines Verteilers (6, 7) einen Kraftstoffzufuhrkreis (9, 10) des anderen Verteilers (6, 7) bildet, wenn der Zufuhrkreis des anderen Verteilers (6, 7) ausfällt, über die Verbindung (21), die Teil des Kreises für die erzwungene Verlagerung von Kraftstoff von einer Einheit in die andere (4, 5) ist, die jeweils den einen und den anderen Verteiler (6, 7) aufweisen.

## Claims

1. Rotorcraft equipment constituted by an architecture for feeding fuel to a power plant (1) comprising a plurality of engines (2,3) for driving in rotation at least one same rotary wing with which the rotorcraft is equipped, the architecture comprising:
*) fuel feed assemblies (4,5) which are allocated to supplying fuel to a respective engine (2,3),
- each assembly (4,5) comprising a fuel tank and a feeder tank (6,7) which is fed with fuel from the fuel tank by a feed circuit (9,10),
- the feed circuit (9,10) comprising at least one feed pump (11,12) dipping into the feeder tank (6,7) and at least one ejector (13,14,15,16) dipping into the fuel tank, the feed pump (11,12) causing a flow of fuel within the feed circuit (9,10), from a capture and a delivery of the fuel by the ejector (13,14,15,16) in the feed circuit (9,10), from the fuel tank to the feeder tank (6,7),
- the feeder tank (6,7) being provided with an overflow device (17,18,19,20) causing an excess to be emptied spontaneously therefrom,
*) a supply circuit (22,23) for supplying fuel from the feeder tank (6,7) to the engine (2,3) to which the assembly (4,5) is allocated, the supply circuit (22,23) comprising at least one supply pump (24,25) which causes a flow of fuel within the supply circuit (22,23) from the feeder tank (6,7) to the engine (2,3),
*) an intercommunication (21) which is interposed between the assemblies (4,5) and which forms an excess fuel overflow from one of the assemblies (4,5) to the other,
*) a transfer circuit for forced transfer of fuel from one of the assemblies (4,5) to the other, which comprises at least one transfer pump causing a bidirectional flow of fuel selectively from one of the assemblies (4,5) to the other,
**characterised in that** the fuel tank included in each of the assemblies is at least one common fuel tank (8) common to both assemblies (4,5), into the inside of which common fuel tank (8) dip the ejectors (13,14,15,16) of the feed circuits (9,10) included respectively in each of the assemblies (4,5).

2. Rotorcraft equipment according to Claim 1,
**characterised in that** the feed circuits (9,10) included respectively in each of the assemblies (4,5) together form the transfer circuit via the common fuel tank (8), the feed pumps (11,12) included respectively in the feed circuits (9,10) of each of the assemblies (4,5) together forming the transfer pump for bidirectional flow of fuel selectively from one of the assemblies (4,5) to the other.

3. Rotorcraft equipment according to any one of Claims 1 and 2,
**characterised in that** the intercommunication (21) is interposed between the feeder tanks (6,7) included respectively in each of the assemblies (4,5), forming an excess fuel overflow from one of the feeder tanks (6,7) to the other.

4. Rotorcraft equipment according to Claim 3,
**characterised in that** the intercommunication (21) leads to the inside of both of the feeder tanks (6,7) in the top portion of the feeder tanks (6,7) and upstream from the overflow devices (17,18,19,20) included respectively in both of the feeder tanks (6,7).

5. Rotorcraft equipment according to any one of the preceding claims,
**characterised in that** the intercommunication (21) forms a member for spontaneously feeding either one of the feeder tanks (6,7) in the event of a failure of the fuel feed pump (11,12) included in the feed circuit (9,10) allocated to that feeder tank (6, 7).

6. Rotorcraft equipment according to Claim 5,
**characterised in that** there is a single feed pump (11,12) for each of the assemblies (4,5), the feed circuit (9,10) of each of the feeder tanks (6,7) being of a capacity adapted to feeding both feeder tanks (6,7) simultaneously.

7. Rotorcraft equipment according to any one of the preceding claims,
**characterised in that** at least one of the feed pumps (11,12) is a booster pump forming a pump for supplying fuel to the corresponding engine (2,3).

8. Rotorcraft equipment according to any one of the preceding claims,
**characterised in that** a pump of the power plant (1) which is driven by at least any one corresponding engine (2,3) forms a supply pump (24,25) for supplying fuel to that engine (2,3).

9. Rotorcraft equipment according to any one of the preceding claims,
**characterised in that** the common fuel tank (8) is formed by a single compartment housing both of the feeder tanks (6,7) included respectively in each of the assemblies (4,5).

10. Rotorcraft equipment according to any one of Claims 1 to 8,
**characterised in that**:
- the common fuel tank (8) is formed from a plurality of compartments with free fluid-flow communication between one another, and
- at least any one of the compartments making up the common fuel tank (8) houses at least one feeder tank (6,7) included in at least one of the assemblies (4,5).

11. Rotorcraft equipped with a power plant (1) comprising a plurality of engines (2,3) which are fed with fuel from a fuel feed architecture according to any one of the preceding claims.

12. Rotorcraft according to Claim 11,
**characterised in that**:
*) each of the engines (2,3) with which the rotorcraft is equipped is independently supplied with fuel from feeder tanks (6,7) which are respectively allocated them,
*) the feeder tanks (6,7) are fed with fuel by means of feed circuits (9,10) which are respectively specific to them, from a common fuel tank (8),
*) the feed circuit (9,10) for feeding fuel to a feeder tank (6,7) constitutes a feed circuit (9,10) for feeding fuel to the other feeder tank (6,7) in the event of a failure of the feed circuit (9,10) of that other feeder tank (6,7), via the intercommunication (21) which participates in the circuit for forced transfer of fuel from one to the other of the assemblies (4,5) included respectively in one and the other of the feeder tanks (6,7).
